# EUROPEAN PATENT APPLICATION

(11) **EP 1 729 206 A2**
(43) Date of publication of application: **06.12.2006**
(21) Application number: 06011110.1
(22) Date of filing: 30.05.2006
(51) Int. Cl.: G06F 3/023

(54) **Method and system for data input**

(30) Priority: 30.05.2005 RU 2005116291
(71) Applicant: Samsung Electronics Co., Ltd., Suwon-si Gyeonggi-do (KR)
(72) Inventor: Glazkova, Leila Yurievna, Moskow (RU); Lee, Angela, Moscow (RU)
(74) Representative: Grünecker, Kinkeldey, Stockmair & Schwanhäusser Anwaltssozietät

(57) **Abstract**

Provided is a method and system for correcting key input when a key button which a user intends to input and its neighbor buttons are simultaneously pressed on a small-size keyboard. For information input, simultaneous activation by the operator of a combination of keys of a keyboard is performed, wherein each of possibility for simultaneous activation of the combination of keys is associated with an individual code generated at simultaneous activation of this combination of keys. The generated code is loaded into the adaptive code conversion unit converting this individual input code into the most probable output code, which is visualized on a display after processing by the device processor for selection of the required symbol and confirmation of the selection.

## Description

The present invention relates generally to instrument making, and particularly to the design of systems for manual data input in small-size devices, particularly in portable computers and telephones.

Data input of alphanumeric information into data processing devices is primarily performed by handwriting and key input methods. Differences in handwriting and style of writing amongst individuals complicate automated recognition of the input symbols. Also, in comparison with the key input, handwritten input takes a longer time to perform. However, a comfortable full-size keyboard typically used with modern desktop calculation devices cannot be implemented in small-size and super compact computers, communicators and mobile phones. Most widespread methods and systems for alphanumeric information input are implemented using a small-size keyboard, and do not involve the use of hand-written information input, which has some advantages such as input of graphics, but not necessarily for input of data such as alphanumeric information.

Since small keyboards and key buttons make it difficult to quickly and correctly input alphanumeric information using one's fingers, and since special tools such as a pen are not always possible to use, designers of small-size devices use keyboards with a reduced number of keys. Moreover, each key is assigned for input of several symbols, and selection is made according to a number of repeated keystrokes. This approach is widely used in the design of mobile phones.

Published Russian patent RU 2088965 [1] and international application PCT/US 98/20200 [2] disclose a design of keyboards with the reduced number of keys, each being undersized. The international application [2] claims additionally a software method for reduction of an ambiguity level of perception of the input information sense by the device, especially in pressing several keys that have the same assigned symbols. A dictionary of the most often-used words of the operator's language located in the device's memory allows the elimination of automatically significant parts of incorrect symbols, combinations of which do not match terms installed in the dictionary. Method [2] was not widely used due to higher requirements to the device performance caused by the complex software. However, the latter did not provide acceptable reliability in recognition of input symbols and words. An improved design has been special key encoding with further decryption. European Patent EP 1447734 [3] discloses an example of this approach. The claimed device is based on encoding of separate keys according to the instruction made by the device operator. This allows for individualization of the keyboard layout and reduced probability of information decryption by a third party. Thus, this solution was not aimed at miniaturization of a keyboard, but instead for information protection.

The present invention has been made to solve the aforementioned drawbacks occurring in the prior art.

It is the object of the present invention to provide a method and system for effective and correct information input, including alphanumeric information, from a miniature keyboard, in which dimensions and the relative position of the keys does not allow pressing a single button by a finger, but instead various combinations of closely located buttons.

This object is solved by the subject matter of the independent claims.

Preferred embodiments are defined in the dependent claims.

The above and other aspects and advantages of the present invention will be more clearly understood from the following detailed description taken in conjunction with the accompanying drawings, in which:
FIG. 1 illustrates codes outputted according to the present invention when at least one key associated with a key to be input is simultaneously pressed;
FIG. 2 illustrates a variety of variants of button pressing when a user is to input a symbol, according to the present invention;
FIG. 3 illustrates a contact area of a finger when several or all keys are simultaneously activated, according to the present invention;
FIG. 4 illustrates a code conversion example of activation of a key or group of keys according to the present invention;
FIG. 5 is a block diagram illustrating a system according to the present invention;
FIG. 6 illustrates an algorithm for the adaptive setting for the concrete operator; and
FIG. 7 illustrates an algorithm for correction of input errors.

The following description is provided to assist in a comprehensive understanding of various preferred embodiments of the present invention disclosed with reference to the accompanying figures. Accordingly, those of ordinary skill in the art will recognize that various changes and modifications of the preferred embodiments described herein can be made without departing from the scope of the claimed invention. Descriptions of well-known functions and constructions are omitted for the sake of clarity and conciseness.

The present invention applies a new method for manual information input from a miniature keyboard, which is a part of an adaptive system of encoding and later decryption of the input symbols and commands from an individual key and also from a set of simultaneously pressed buttons.

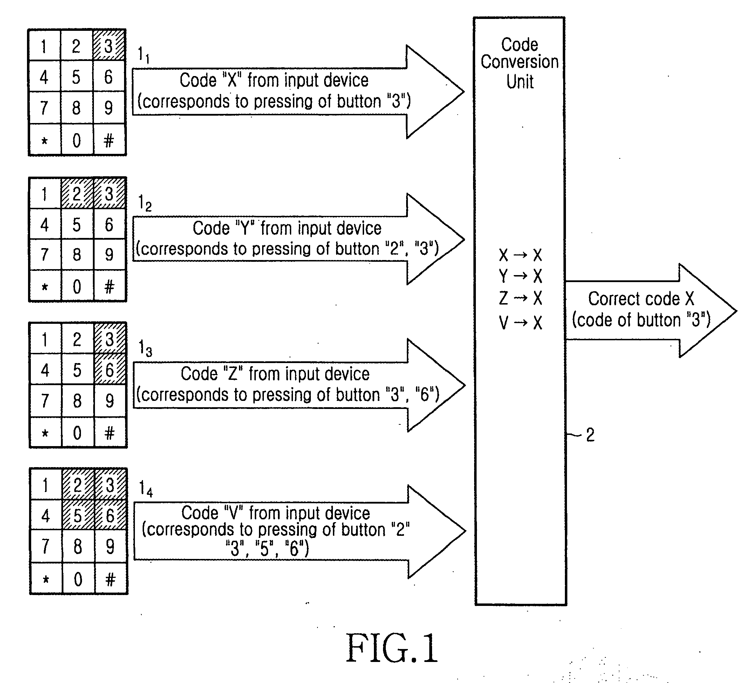

Fig. 1 presents a standard keyboard of a mobile phone comprising twelve keys with fixed values. In this case the keys are designated by symbols from 0 to 9 and by two service symbols. This results in keyboard as a preliminarily encoded device. The individual code is generated not only by single button activation, as in the majority of keyboards, but also by simultaneous activation of several neighboring buttons in different variants. Such encoding can be performed by software or hardware methods, depending on a structure of the used keyboard. Fig. I demonstrates codes output from the input device, in this case from a keyboard, at activation of one or several keys, when the operator desires to input a symbol associated with button "3". The encoding scheme can be either embedded by the device manufacturer or installed by the user from the available software variants in accordance with the user's preferences, for example, based on convenience to input data by right or left hand, or simplicity to remember possible combinations. The example in Fig. I demonstrates that activation of button "3" in variant 1₁ generates code "X", simultaneous activation of two neighbor buttons "3" and "2" in variant 1₂ generates code "Y", and so on. Each of the generated codes in the keyboard does not proceed directly to the device processor, which would necessitate the use of high-power and expensive processors, but goes to the intermediate code conversion unit 2 wherein the received codes are transformed into another set of codes accessible for processing by the phone processor.

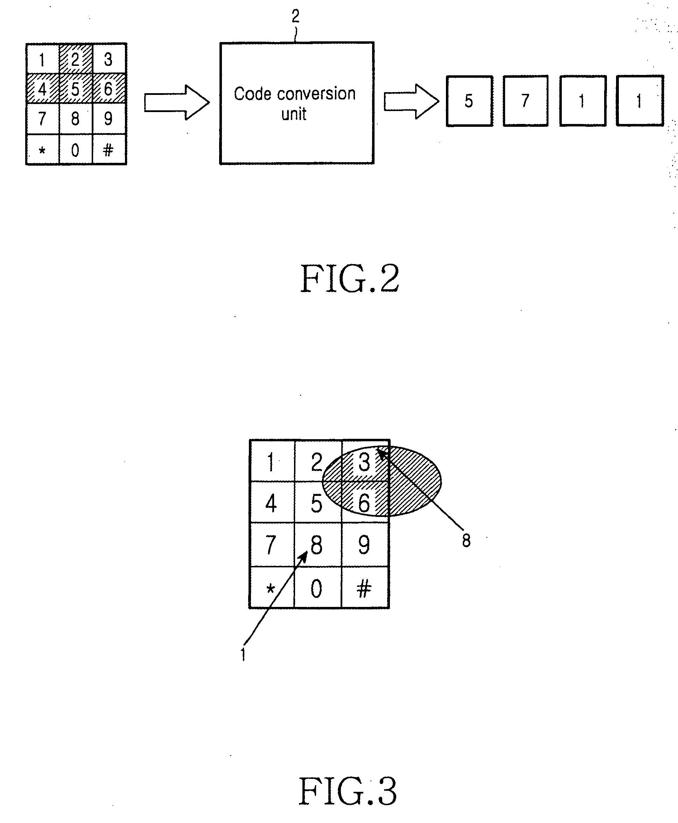

Fig. 2 presents variants of a button pressing by the operator to input a symbol. Each of the variants has an individual code generated by the keyboard. When there is no practical meaning in selection of encoding scheme, for example, it is possible to use an approach presented in prototype [3], as described above.

Oval 8 in Fig. 3 demonstrates a possible area of contact (pressing or sensor contact) of a finger with a keyboard at the selection of symbol "3". Thus, since this key is located at the keyboard periphery, i.e. in the demonstrated case it is the end angular key, the possibility to effect it as an individual button is not excluded. However, in a common case, an attempt to input symbol "3" leads to activation of various combinations of neighbor buttons "2", "5", "6".

Objectively, this variant of the present invention realizes that keyboard miniaturization directly depends on the operator's peculiarities. If sizes of an operator's finger and a key are different, it is possible to activate several or all keys simultaneously. It is clear that simultaneous activation of all buttons will complicate procedure in eliminating uncertainties in input symbol recognition. In practice, it is preferred to select the keyboard in such a manner that the print of a finger, i.e. a finger-pad of the privileged operator, does not exceed about 75 percent of the keyboard area.

Each possible variant of simultaneous activation of a button has an individual code (Fig. I), which is transmitted to code conversion unit 2 wherein based on the conformity table of unit 2 the received codes are recognized, and transformation into the most probable code "X", complying with activation of button "3", is performed. The "X" code is later transmitted via a channel 3 into processor 4 of the device (for example, a mobile phone or a pocket computer).

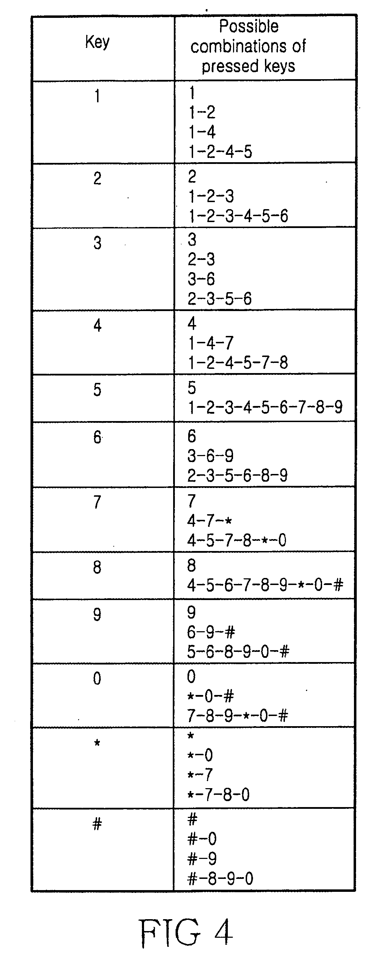

Any inaccuracy in touching a group of keys associated with code "X" generates another code in the code conversion unit 2. If at selection of verbal information the processor may be programmed for selection of the most probable letter based on the installed frequency word list of the applied language, at input of digits or commands an error can be corrected only by the operator in the majority of cases. Due to this, the claimed method provides for displaying of a list of possible variants of a symbol or command associated with the activated group of keys at each key press. The list is arranged according to descending order of degree of possibility that the activated group of keys has to generate this symbol or command after processing in unit 2. The operator selects from the list a symbol or command, which he desires to fix by the active group of keys. Fig. 4 presents the code conversion example of activation of a key or group of keys according to the present invention, wherein the left column contains the key with a symbol that the operator desires to input. The right column contains the most probable combinations of this key with the neighbor keys. This provides a generation of various codes by the keyboard. Since the codes are then transmitted to code conversion unit 2, hereinafter they will be termed "input codes" in contrast to those formed in unit 2 and termed "output codes". It is assumed that unit 2 has storage in the form of a memory unit in which the initial table of matching of input and output codes is written. Fig. 4 demonstrates an endless number of combinations of simultaneously activated keys, for example, at attempt to activate key "2" variant of activation of group of keys "1" "2" "4" "5" may arise (not shown in Fig. 4).

This method is derived from the prototype by trainability principle, i.e. adaptivity, of code conversion unit 2. This unit remembers "preferences" of the operator during initial setup of the device. The operator keystrokes all possible combinations of keys. In the conformity table each receives one input code and several output codes. From the displayed variants the code that meets the intention at symbol input is selected. Code conversion unit 2 remembers the variants selected by the operator, and the next time the number of proposed variants is significantly reduced. Upon installation of simple software with a self-learning function the truthfulness of a correct code input will be increased according to the statistical value, i.e. frequency, of this combination of buttons at presentation of the required code. In the simplest case, the variant selected in the previous learning session takes the first position in the list of probable variants. At the repeated learning sessions the more seldom used variants are deleted. This helps to conveniently reduce the size of the list (for example, up to three variants), and helps to better economize time within practical phone service.

In order to simplify further keyboard operation, the operator then performs several repeated learning sessions. The earlier the displayed variant is verified by the user, the higher truthfulness level is assigned and the shorter the displayed list can be. Furthermore, it is important to define an instruction to the unit, according to which the variant located in the upper line of the list is treated as verified by default, besides the case when the operator cancels the selection within a time interval the operator specifies, such as one second.

When at activation of key groups mainly correct variants are displayed (i.e. the closest to the operator's intention), the initial adjustment is treated as mainly completed. So, adjustment, i.e. adaptation of code conversion unit, is performed by conduction of repeated sessions of manual information input from a keyboard, which is conducted by confirmation of selection of a correct variant input.

Introduction of two-phase encoding using a preliminary encoded keyboard and a learning unit of code conversion allow for the implementation of new methods. First, a keyboard can be made replaceable either at a hardware or software level. This allows for an expansion of the application area of the device, applying one keyboard for alphanumeric information input, and the other (replaceable) for such input as commands. The keyboard can also be changed according to preferences such as an operator's anatomic peculiarities and preferred language.

Second, code conversion unit 2 can also be replaceable or extractive. At extracted code conversion unit 2 the operator can use the device since the device processor cannot recognize codes generated by the keyboard at simultaneous activation of a group of keys. From the other side at changing of the operator, the code conversion unit can be also varied, taking into consideration that the code conversion unit is set individually by the operator. Implicitly it is expedient to store in the external memory the data needed for setting of the adaptive code conversion unit 2 for the specific operator. This will help in the quick adjustment of a new unit, if the prior applied unit is lost.

This variant adaptation of a code conversion unit is performed by the writing of an individual program prepared for the particular operator. So, the manual method for information input, involving simultaneous activation by the operator of a combination of keys, wherein each possible combination of keys for simultaneous activation is associated with the individual code, is generated at simultaneous activation of this combination of keys. The generated code is then loaded in the adaptive code conversion unit, which converts the individual code into the most probable output code fitting the concrete symbols, words or commands that are preliminarily fixed by the code, which after processing by the device processor are displayed on the display for selection by the operator of required symbol or command. After this, selection of a symbol or command is confirmed. Then, in the adaptive code conversion unit the operator's choice is stored assigning it the highest level of trust in comparison with other probable variants basing on which the operator makes his selection.

It should be mentioned that combination of keys not only indicates a group of neighbor and unpremeditated active keys, but also a "chord", i.e. simultaneous activation of several groups of keys. For example, pressing two groups of keys by two fingers is performed, if the size of the keyboard permits. Each of such chords has an individual code, which may initiate delivery of one or more symbols fixed by it. The conformity table, i.e. code conversion, can be formed or adapted by the operator, taking in consideration his interests. For example, one of a plurality of chords can be associated with the user's password for the device or pin-code of a phone.

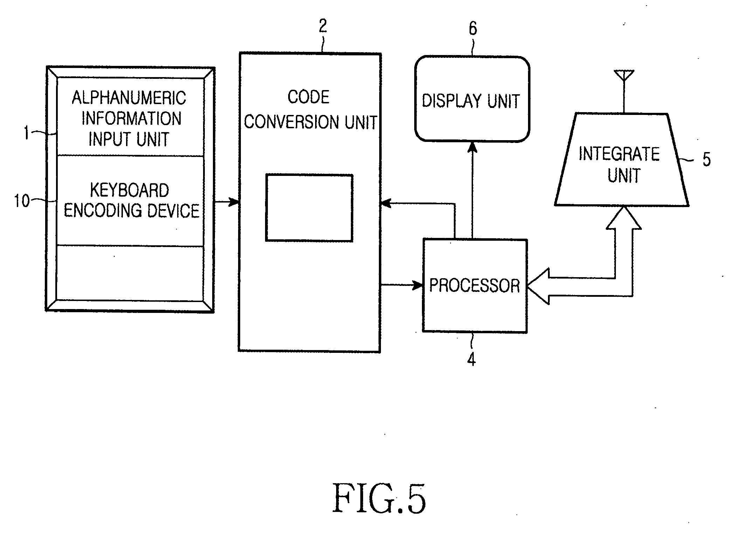

Fig. 5 illustrates the following:
- Unit for input of alphanumeric information 1 executed as a miniaturized alphanumeric keyboard in which device 10 for keyboard encoding is embedded and implemented in a hardware or a program variant;
- Adaptive code conversion unit 2 with a memory unit, wherein output of unit 1 for input of alphanumeric information is connected with the first input of the adaptive unit 2;
- Processor 4 of an executive unit, which is executed as a phone or computer, and output of adaptive unit 2 is connected with input of processor 4 of the executive unit. The first output of processor 4 is connected to second input of adaptive code conversion unit 2;
- Display 6, the input of which is connected with the second output of processor 4. Display 6 is a device for display of information from processor 4 of the executive unit.

Preferably, integrate unit 5 is used for communication with external devices. Integrate unit 5 can be implemented as a transmitter in such devices as a phone, radio station or remote control panel. It is also preferred for integrate unit 5 to have a receiver for receiving external signals. This simplifies programming and learning of adaptive code conversion unit 2. In practice, integrate unit 5 can be implemented for communication as a transceiver connected to processor 4 of the executive unit with a duplex channel. Hence, communication channel can be wire-connected or wireless and also an optical or radio channel.

In significant contrast to prototype [3], the usage of adaptive encoding in the present invention not only for individual keys, but also for a group of keys, and also "chords" (i.e. simultaneous pressing of combination of two or more keys), expands the system application area and increases its performance. Moreover, two-phase encoding better allows for individualization the device. If the device has to be accessible for several operators, for example a business telephone set, individual settings are stored in the memory unit of the external device, to which the device is connected via cable or wirelessly. When the device is provided to another operator, the operator takes its setting program from the device to the computer, and then the device is programmed either in automatic or manual mode for another operator.

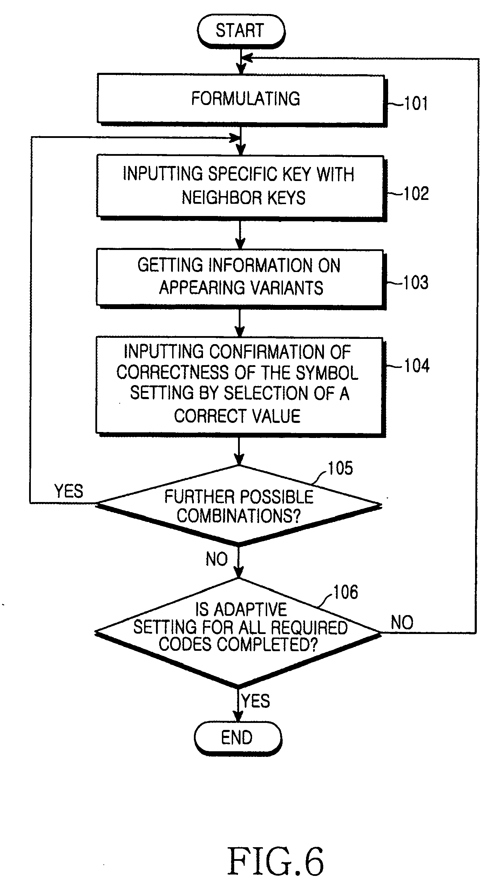

Fig. 6 illustrates an algorithm for the adaptive setting for one operator, which is described as follows:
- 101. Formulating a task, for example, by the input the required code "3";
- 102. Inputting the first combination of key "3" with neighbor keys (for example, pressing 3,6);
- 103. Receiving information on appearing variants - "3" or "6" by means of a display;
- 104. Inputting confirmation of correctness of the symbol setting by selection of a correct value, in this case, "3";
- 105. Repeating sequence 102, 103, 104 for further possible combinations;
- 106. Repeating sequence of actions 101, 102, 103, 104 for all required codes (0-9, *,#).

Such adjustment is needed to provide practical possibility to use a keyboard of an ultra-small size. Using such a keyboard the operator in majority of cases will have to press a group of keys simultaneously, since the location is very close from one to another. Taking this into consideration, the operator has to adjust his or her keyboard interaction with the code conversion unit and the operator's coordination of movement, vision, size of fingers and the keyboard.

At such preliminary adjustment, simultaneous keystroke of a group of keys does not cause any problems, since code conversion from a group of keys is performed, i.e. an input code, into the required code, the value of which is defined in the code conversion unit taking into consideration the adaptive setting.

It is also possible to have a mode for correction of input errors that are typical for the specific operator.

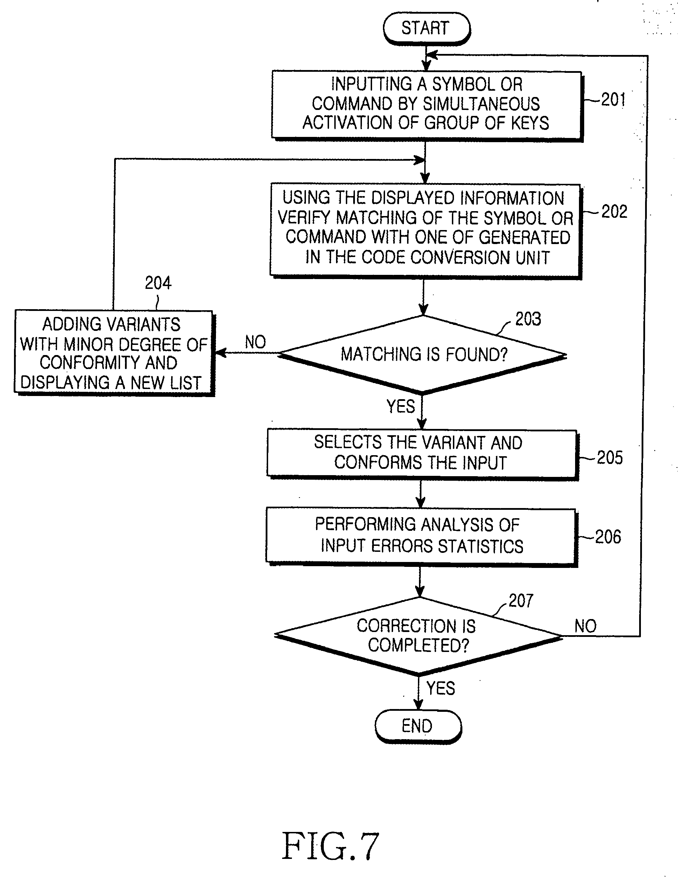

Fig. 7 illustrates an algorithm for correction of input errors, which is described as follows:
- 201. Inputting a symbol or command by simultaneous activation of group of keys;
- 202. Using the displayed information verify matching of the symbol or command with one of generated in the code conversion unit;
- 203. Performing analysis of matching of desirable and one of displayed values on the display. If the matching is found, then the algorithm proceeds to item 205. If the desirable value does not match with displayed values, then the algortihm proceeds to item 204;
- 204. By means of a code conversion unit, a list of variants is increased by adding variants with minor degrees of conformity, and a new list is displayed.
- 205. The operator selects the variant and conforms the input;
- 206. Analysis of input errors statistics is performed;
- 207. Continuing correction of input errors and at further default performing indication starting from the most probable variants.

The size of keyboards and individual keys of course varies, so it is possible to use a separate switch or chord selected by the operator for switching from digital to an alphabetic panel, especially when there is a limited number of large keys. The operator can also dynamically change a code conversion algorithm for operation with different applications that are stipulated by parameters of the learning program. In the simplest way selection of the applied algorithm, i.e. changing of conformity table, is performed using a switch; however, algorithm changing can also be initiated by activation of a combination of keys provided for this purpose. This method significantly expands the application area of the method and system disclosed herein.

The following example illustrates this case.

A keyboard of any type can be used not only for input of alphanumeric information, for example in an electronic notepad or pocket translator, but also for input of various commands. Adding the external device communication unit in the claimed system, for example, infrared, optical or a radio channel to communicate with computer, phone, transmitter or another external executive unit, provides the ability to transmit these commands on the devices and download information from these devices (see Fig. 5 on which external device communication unit 5 is shown). In particular, having communication with the computer, the operator can significantly simplify and speed up a phase for initial adjustment of a new input system by downloading the prior used program from the computer. In the present invention, it is possible to associate tasks to activate such functions as an electronic lock in an apartment or a car, activation of "closed" TV channels from the panel and electronic wallet control, with some particular applications or some chords.

Hence, implementation of the device in the present invention is preferred either as a transmitting-receiving unit of a phone, or as a transmitting unit of an external device remote control panel. Preferred is an implementation of the device of the present invention with an external device communication unit with the possibility to transmit commands or receive information via the accessible communication channel.

Those skilled in the art would recognize that the said description of the system and method is presented to illustrate approach for this task solving, and it is also possible to have other practical variants within the scope of the detailed description and of the appended claims.

## Claims

1. An information input method, comprising simultaneous manual activation by
of one of a plurality of combinations of keys of a keyboard on a device including a display and a processor, wherein each combination of keys is associated with hardware or software having an individual code generated at the simultaneous manual activation of each combination of keys, after which the individual code is loaded into an adaptive code conversion unit that converts the individual code into a most probable output code, which is visualized on the display after processing by the processor for a selection of a required symbol and confirmation of the selection.

2. The method of claim 1, further comprising, after selection of the required symbol and confirmation of the selection in the adaptive code conversion unit, remembering the selection by assigning to the selection a highest truthfulness level in comparison with other probable variants among which the selection was made.

3. The method of claim 1 or 2, further comprising performing adaptation of the code conversion unit by creating a conformity table during repeated sessions of manual information input from the keyboard, with confirmation of correctness of the loaded code.

4. The method of claim 1 or 2, further comprising performing adaptation of the code conversion unit by writing in it from an external device having an individual program prepared for a single operator, said individual program including a conformity table of input and output codes.

5. The method of one of claims 1 to 4, further comprising reducing a list of variants displayed for the selection by deleting variants with a low truthfulness level after a repeated assignment of a highest truthfulness level to a symbol.

6. The method of claim 1, further comprising accepting, by default, a symbol of the highest truthfulness level, if this selection is not canceled within a selected time period.

7. The method of one of claims 1 to 6, wherein the confirmed command is transmitted to an external device for processing associated with the command.

8. An information input system, comprising:
an input device, implemented as a compact keyboard, wherein key activation or simultaneously activated groups of keys are associated with an individual code;
an adaptive code conversion unit including a memory unit, a display, an executive unit with a processor and an external device communication unit, an output of the input device being connected with a first input of the adaptive code conversion unit, an output of the adaptive code conversion unit being connected with an input of the processor of the executive unit, the first output of the processor being connected to a second input of adaptive code conversion unit, a second output of the processor being connected with the display input, and the processor of the executive unit being connected to external device communication unit.

9. The system of claim 8, wherein a minimum size of the keyboard is stipulated by size of a finger-pad of an operator.

10. The system of claim 8, wherein the keyboard is removable.

11. The system of one of claims 8 to 10, wherein the adaptive code conversion unit is removable.

12. The system of one of claims 8 to 10, wherein the adaptive code conversion unit is programmable.

13. The system of claim 12, wherein the adaptive code conversion unit is programmable by manual setting.

14. The system of claim 12, wherein the adaptive code conversion unit is programmable for automatic setting by use of a code conformity table from an external computer.

15. The system of one of claims 8 to 14, wherein the executive device is implemented as a receiving-transmitting unit of a phone.

16. The system of one of claims 8 to 14, wherein the executive device is executed as a transmitting unit of an external device remote control panel.

17. The system of one of claims 8 to 16, wherein the external device communication unit is executed as a transceiver connected to the processor of the executive device.
